# EUROPEAN PATENT SPECIFICATION

(11) **EP 4 575 447 B1**
(45) Date of publication and mention of the grant of the patent: **09.12.2026**
(21) Application number: 23307251.1
(22) Date of filing: 19.12.2023
(51) Int. Cl.: G01M 11/02, G02B 27/01

(54) **COMPENSATION MECHANISM FOR MEASURING AN IMAGE QUALITY PARAMETER FOR AN EYEPIECE**
KOMPENSATIONSMECHANISMUS ZUR MESSUNG EINES BILDQUALITÄTSPARAMETERS FÜR EIN OKULAR
MÉCANISME DE COMPENSATION POUR MESURER UN PARAMÈTRE DE QUALITÉ D'IMAGE POUR UN OCULAIRE

(43) Date of publication of application: 25.06.2025
(73) Proprietor: Essilor International, 94220 Charenton-Le-Pont (FR)
(72) Inventor: DIVO, Fabien, 95160 MONTMORENCY (FR)
(74) Representative: Plasseraud IP

(56) References cited:
- EP-A1- 3 726 836
- CN-A- 111 610 638
- US-B1- 10 277 893
- US-B1- 10 402 950
- US-B1- 10 430 939

## Description

### DOMAIN

The present invention relates to ophthalmic optics, and more precisely to a system, a method and a non-transitory storage medium for obtaining an image quality parameter of an eyepiece suitable for being disposed in an augmented and/or virtual reality head mountable device.

### BACKGROUND

In the realm of augmented reality (AR) and virtual reality (VR) eyewear, the assessment of image quality is a critical aspect of manufacturing and development. AR and VR eyewear, which often include prescription (Rx) lenses, present unique challenges in evaluating image quality due to the varying nature of prescriptions among users and the complexities introduced by the eyepiece design.

The current state of the art includes various methods and standards for assessing image quality in AR and VR eyewear. For instance, the IEC 61145 standard provides guidelines for measuring aspects like contrast, color uniformity, distortion, and modulation transfer function (MTF). It recommends using a movable sensor head to mimic eye movements. However, these standards do not adequately address the complexities introduced by the presence of Rx power in the eyepiece.

In US10227893 B1 a method for characterization of distortion of a head-mounted display is described, wherein images of pattern are obtained by rotating cameras simulating the eyes.

Current solutions, such as those proposed in patent EP3318915, include methods like immersion (using a liquid with a refractive index similar to the eyepiece), which, while effective, can be impractical due to the need for sealing and cleaning. Other methods include using wafers with opposite power placed close to the Rx lens, or adjustable focus mechanisms in measurement equipment. However, these solutions are limited in their ability to compensate for a wide range of prescriptions, particularly when considering astigmatism, and do not provide accurate measurements across the entire field of view (FOV).

Moreover, some known systems allow testing AR/VR devices using photocolorimeters, yet these systems fall short in accurately measuring image quality in the presence of Rx power. The current approaches tend to focus on central image quality, neglecting the periphery where optical aberrations can significantly impact the overall image quality, especially in larger FOV scenarios.

There is therefore a need for practical methods and systems which allow accurately measuring image quality of AR and VR eyewear, especially when the eyepiece contains Rx lenses. The presence of Rx power can lead to blurred images, making it challenging to conduct essential image quality tests such as MTF, distortion, and chromatism evaluation. Additionally, the varying prescriptions for different users, including both single vision and progressive lenses, add to the complexity. The design of the eyepiece, influenced by factors such as gluing optical components and the coupling between light engines and combiners, further complicates the process.

Current solutions, while attempting to address these issues, have limitations in terms of practicality, range of Rx compensation, and accuracy across the entire FOV.

A desirable solution would be one that can accurately measure image quality across a wide range of prescriptions, for both single vision and progressive lenses, and across the entire FOV, without being hindered by the inherent limitations of current methods. This solution would ensure that the virtual image quality, as a key feature of the overall user experience of AR and VR eyewear along with aesthetics, comfort, and weight, is maintained at optimal levels.

### SUMMARY

The invention is defined by the appended independent claims. Additional features and advantages of the concepts herein disclosed are set forth in the description which follows.

The present disclosure aims at improving the situation.

To this end, the present disclosure describes a system for obtaining an image quality parameter of an eyepiece suitable for being disposed in an augmented and/or virtual reality head mountable device, the eyepiece comprising at least one non-plano lens and one pattern generating module,
the system comprising an image capture system (ICS) designed to acquire images within a specific angular range which is smaller than the total field of view of the eyepiece, the ICS comprising a variable focus control unit (VFCU), each image showing a specific pattern generated by the pattern generating module and transmitted by the lens,
the system being configured to utilize the ICS to acquire the images from varied orientations simulating eye movements of a user while operating the VFCU to maintain, for each image, sharpness of the specific pattern showed on said image across at least one predetermined orientation, and
the system being configured to obtain at least one image quality parameter determined from the acquired images, where the parameter is indicative of a quality of images as perceived through the eyepiece.

The present disclosure also describes a method for obtaining an image quality parameter of an eyepiece suitable for being disposed in an augmented and/or virtual reality head mountable device, the eyepiece comprising at least one non-plano lens and one pattern generating module,
the method being implemented by a system for obtaining the image quality parameter of the eyepiece, said system comprising an image capture system (ICS) designed to acquire images within a specific angular range which is smaller than the total field of view of the eyepiece, the ICS comprising a variable focus control unit (VFCU), each image showing a specific pattern generated by the pattern generating module and transmitted by the lens,
the method comprising:
   utilizing the ICS to acquire the images from varied orientations simulating eye movements of a user while operating the VFCU to maintain, for each image, sharpness of the specific pattern showed on said image across at least one predetermined orientation, and
   obtaining at least one image quality parameter determined from the acquired images, where the parameter is indicative of a quality of images as perceived through the eyepiece.

The present disclosure also describes a non-transitory computer-readable storage medium having stored thereon a computer program comprising instructions which, when executed by a processor, cause the processor to carry out the above method.

In an example, the images are acquired by the ICS over angular ranges that collectively cover at least 70% of the total field of view of the eyepiece.

In an example, the system further comprises a module for obtaining a prescription of a user of the eyewear, wherein the VFCU is operated based on the obtained prescription.

In an example, the prescription includes at least one of a sphere value, a cylinder value, a cylinder axis, a prism value and an addition value.

In an example, the prescription includes at least a cylinder value and/or a cylinder axis and the VFCU comprises a cylindrical correction unit (CCU).

In an example, the prescription includes at least a cylinder axis, the VFCU is devoid of a cylindrical correction unit and the at least one predetermined orientation is chosen based on the obtained cylinder axis.

In an example, the specific pattern generated by the eyepiece and showed in at least one image is chosen based on the prescription.

In an example, a size of the specific angular range within which the ICS acquires images is chosen depending on the user's prescription.

In an example, the prescription lens is a progressive lens.

In an example, the VFCU includes an autofocus module for an optical power adjustment over a limited range, a set of fixed-power lenses, and a mechanism to select, from said set, a lens to be used in conjunction with the autofocus module.

### BRIEF DESCRIPTION OF THE DRAWINGS

Figure 1 depicts an augmented and/or virtual reality head mountable device in an exemplary embodiment.
Figures 2 and 3 depict a system for obtaining an image quality parameter of an eyepiece suitable for being disposed in an augmented and/or virtual reality head mountable device, in an exemplary embodiment.
Figures 4A, 4B, 4C and 4D depict images captured by an image capture system comprising a variable focus control unit for the purpose of determining an image quality parameter, in an exemplary embodiment.
Figures 5A and 5B depict specific areas of Figures 4C and 4D, respectively.
Figures 6A, 6B, 6C and 6D depict images captured by an image capture system comprising a variable focus control unit for the purpose of detecting a dead pixel, in an exemplary embodiment.
Figure 7A depicts a generated pattern in an exemplary embodiment.
Figures 7B and 7C depict images captured by an image capture system comprising a variable focus control unit, the images representing the generated pattern of Figure 7A as viewed through an optical lens of an eyepiece, in an exemplary embodiment.
Figures 8A, 8B and 8C depict images captured by an image capture system comprising a variable focus control unit for the purpose of a MTF analysis, in an exemplary embodiment.
Figure 9 depicts a luminance profile extracted from Figure 8C, in an exemplary embodiment.
Figures 10 and 11 depict MTF measurements performed by analyzing images captured from various positions, with various orientations and according to different fields of view, in exemplary embodiments.
Figure 12 depicts a system for obtaining an image quality parameter of an eyepiece suitable for being disposed in an augmented and/or virtual reality head mountable device in an exemplary embodiment.

### DETAILED DESCRIPTION

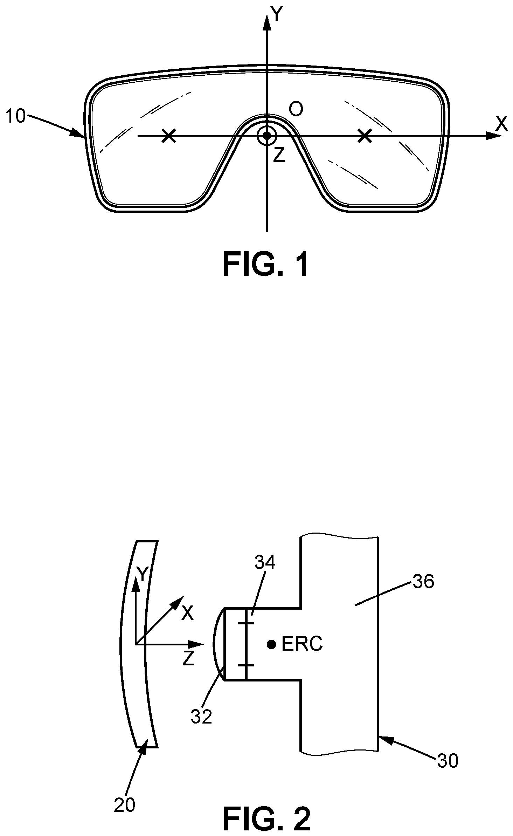

The present disclosure innovatively addresses the evaluation of image quality parameters in an eyepiece suitable for augmented and/or virtual reality head mountable devices (AR/VR HMDs) (10) as schematically depicted on Fig. 1.

Aspects of the present disclosure include a system which is an image capture and evaluation system, a method which is an image capture and evaluation method and a non-transitory computer-readable storage medium. These aspects are specifically designed to analyze the performance of such eyepieces under varying conditions and orientations, as would be experienced by a wearer in actual use. In the context of the following description, the terms "wearer" and "user", referring to an AR/VR HMD, are considered synonyms.

Central to the AR/VR HMD is the eyepiece, which comprises two main components: a pattern generating module or pattern generator and an optical lens.

The pattern generator is a crucial element of the eyepiece, which is responsible for creating visual content or specific patterns that are projected or displayed to the user. It could be a digital display, holographic element, or any other type of visual content creator capable of generating precise and intricate patterns. These patterns are essential for evaluating image quality as they provide a consistent benchmark across different images.

The optical lens is another integral component of the eyepiece. Its primary function is to focus and direct the light from the pattern generator to the user's eye, ensuring that the patterns are visible and clear. While the lens can be plano (providing no corrective spherical power), the present disclosure is particularly interested in non-plano lenses. Non-plano lenses have curved surfaces and are often used for vision correction or specific optical enhancements. This includes correcting (prescription) lenses, which are tailored to the individual's vision needs, anti-fatigue lenses designed to reduce eye strain, and myopia control lenses, which are specially designed to slow the progression of myopia in young wearers.

The system employs an image capture system (ICS) equipped with a variable focus control unit (VFCU). The ICS is engineered to acquire images, each within a specific angular range, which is deliberately smaller than the total field of view of the eyewear. This allows for a more focused and detailed analysis of the image quality in specific sections of the field of view.

The said images may be obtained indirectly by the ICS, by extracting the said images from a bigger image obtained by the ICS.

The said images may be obtained directly by the ICS.

In a possible implementation, the ICS is combined with a motion system to form a movable measuring head configured to acquire the images from various possible directions. Further, operating the VFCU while acquiring the images using the ICS allows maintaining the sharpness of the specific pattern displayed on each image, adjusting focus as needed to simulate the natural eye movements of a user.

In this system, each captured image corresponds to a different, limited field of view, emulating various gazing directions of an AR/VR HMD wearer. This method ensures that the analysis covers a substantial portion of the total field of view, ideally at least 70%, and preferably more, for instance at least 80% or at least 90%.

The VFCU which is integral to the ICS is a compensation system configured to adjust at least for optical power and, optionally for cylinder power, in each specific gazing direction being emulated for each image, in order to obtain a sharp image across at least one specific predetermined direction. Further details on the technical meaning of image sharpness and on the determination of the direction according to which image sharpness is sought when capturing an image are provided in a later passage of the following description.

This flexibility in compensation allows the system to accommodate a wide range of prescriptions and gaze orientations, providing a comprehensive assessment of the eyepiece's image quality across its total field of view. By tailoring the compensation to each emulated gazing direction, the system ensures that the image quality is consistently sharp and accurate across the entire range of captured images.

Furthermore, the disclosure proposes a specific embodiment of the VFCU that simplifies the Rx compensation process. In this embodiment, only spherical compensation or variable focus is necessary, even for eyepieces with astigmatic lenses. This significantly reduces the complexity of Rx compensation, making the system more efficient and practical for a wide range of AR/VR eyewear applications.

Further details on the image capture and evaluation system are now provided.

The image capture and evaluation system comprises, as part of the ICS, a 2D sensor configured to capture a virtual image coming from the eyepiece.

The image capture and evaluation system may further comprise processing means configured to extract metrics from each of the captured images. These metrics may include for instance global or local luminance, luminance, variations in luminance or gradients within the field of view, distortion, ANSI contrast, and the presence of any dead or hot pixels. Additionally, it assesses the sharpness of transitions between black and switched-on pixels, providing a comprehensive analysis of image quality.

At least part of the processing means may be provided remotely, in which case the system may comprise a communication interface to, for instance, transmit the captured images to a remote entity and then collect, from the remote entity, the metrics extracted from the captured images.

Various types of sensors can be employed in this system, depending on the specific requirements of the image quality tests. Options include a photocolorimeter, which is suitable for conducting a wide array of tests, a simpler photometer for more basic assessments excluding color tests, or even a camera for analyzing distortion, sharpness, and pixel uniformity.

The ICS has an entry pupil, which design is ideally similar to that of a human eye pupil, both in diameter (ranging between 3mm and 8mm, preferably around 4mm) and position, to mimic the natural viewing experience of a user as closely as possible.

For Rx compensation, the variable focus control unit (VFCU) may be configured to accommodate compensation for both spherical and cylindrical power or exclusively for spherical power.

Spherical and cylindrical power compensation is achieved through a dual system: a variable focus mechanism and a variable cylinder power component. The variable focus can be an autofocus feature within the measurement equipment or accomplished with additional varifocal lenses, such as those from Optotune (model EL-10-42-OF).

The variable cylinder power is obtained using two rotatable cylinders with opposite powers (+C and -C), aligned with the optical axis of the measuring part. Adjusting their relative orientation allows for the required cylindrical power adjustment, as detailed in US 10492676.

For spherical power alone, variable focus optics are utilized. This method optimizes image sharpness for spherical Rx corrections but isn't suitable for astigmatism or progressive lens prescriptions.

When the autofocus range, typically from +Infinity to 0.25m, does not cover the full spectrum of spherical Rx (commonly -6D to +4D or broader ranges like -20D to +20D), additional lenses are employed. For instance, integrating a +4D lens accommodates hyperopic prescriptions, shifting the focus range to cover +4D to 0D. Conversely, a -2D lens enables the system to cater to myopic users beyond -4D, extending the compensation from - 2D to -6D.

However, the limited autofocus range can pose challenges, especially when assessing images with a large FOV where optical aberrations can impact the accuracy of measurements like MTF or Michelson contrast. To mitigate this, the compensation range is extended with the aforementioned supplementary lenses, ensuring measurement precision even as FOV and associated aberrations increase.

The image capture and evaluation system may comprise a dedicated software component configured to provide specific images to the AR/VR system, so as to display specific patterns to be used for image quality assessment. The pattern may be chosen based on known user data, such as prescription data of a wearer of an HMD comprising the eyepiece being tested, or on known lens data, such as expected characteristics, such as Rx characteristics, of the optical lens of the eyepiece being tested.

For simpler Rx compensation scenarios where the prescription data of the wearer and/or the expected characteristics of the optical lens include a cylinder axis, the pattern may be designed with features oriented in a specific direction with respect to the cylinder axis, for instance in a direction that is either parallel or perpendicular to the cylinder axis.

The image capture and evaluation system may further comprise a motion mechanism enabling a relative movement between the eyepiece and the ICS. The motion system may be configured to allow positional adjustments in all possible directions and orientations.

The directions may be represented as X-Y (horizontal, vertical) and Z (along the optical axis). Selecting a specific part of the eyepiece for capturing an image and subsequently evaluating the selected part of the eyepiece using the captured image may involve controlling the motion mechanism to perform positional adjustments in the X-Y-Z directions before capturing the image.

A fundamental feature of the motion system is its ability to adjust azimuth and elevation orientations. This adjustment is essential for mimicking the eyegaze direction, which varies when a user looks at different parts of the virtual image. This feature is instrumental in enabling image analysis from different directions, thus covering the full field of view despite the limited field of view (FOV) provided by the ICS.

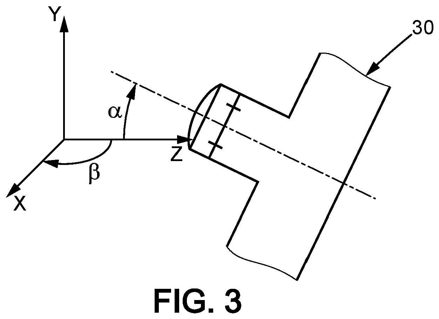

A possible mechanism for positioning an AR/VR HMD in relation to the ICS is now described, in relation with Fig. 2 and Fig. 3.

The eyepiece to be tested (20) or the AR/VR HMD in which such eyepiece is mounted, may be securely mounted using a holder designed to maintain the eyepiece at a specific position and with a specific orientation that replicate the average posture of a wearer standing upright with their head held straight. Thus, the axis defined by the centers of the right and left eyepieces is aligned parallel to the X-axis, Y is vertical, and the Z-axis corresponds to the user's straight-ahead gaze direction.

For reference purposes, the midpoint between the centers of the right and left eyepieces may be designated as a coordinate origin (X=0, Y=0, Z=0).

Prescription (Rx) data relevant to the eyepiece under examination may be collected. This data may include sphere, cylinder, and axis values for at least one eye (denoted as _r for the right eye and _1 for the left eye). This data may further include eye position data corresponding to a position of the user's eye when focusing on the center of the virtual image, including: the position of the eye pupil (Xp_r, Yp_r, Zp_r) and the gaze direction (Az_r, Elv_r) for the right eye, with analogous parameters for the left eye. Alternatively, the coordinates of the eye rotation center (ERC) for each eye (Xerc_r, Yerc_r, Zerc_r for the right eye) may be used, along with the gaze direction, to define pupil position.

The eye rotation center is the rotational pivot of the wearer's eye. The position of the eye rotation center may be considered to be a fixed position with respect to the coordinate origin. The Z-position may either be measured or set to a standard value (e.g., 8 mm, 9 mm, 10 mm, 11 mm or 12 mm behind the entry pupil of the ICS).

The distance between the eyepiece (20) and the entry pupil (34) of the ICS (30) may be set to correspond to the distance between the eyepiece when worn and the exit eye pupil of the wearer. As already explained, the ICS may comprise an additional lens (32) which is for example selected among a set of a limited number (for instance 2, 3, 4, 5,6 7, 8, 9 or 10) of possible additional lenses each being defined by a specific optical power and which is placed at an appropriate position with respect to the entry pupil (34) of the ICS to offset the boundaries of the allowable compensation range provided by the VFCO. The ICS further comprises a 2D sensing module (36) such as a photocolorimeter, a photometer or a camera, which is positioned behind the entry pupil (34).

For simplification, subsequent descriptions assume measurements are taken for the right eye only.

Some exemplary options are now provided as to the contents of the prescription data considering different lens types for the optical lens of the eyepiece.

When the optical lens is a progressive addition lens, the prescription data may comprise an addition power, along with supplemental eye pupil positions and gaze directions for near vision (Xp_nv_r, Yp_nv_r, Zp_nv_r, Az_nv_r, Elv_nv_r), which do not necessarily align with the center of the field of view.

For all lens types, different sphere_i, cylinder_i and axis_i values may be defined for n different eye pupil positions where n is a positive integer and i is a positive integer comprised between 1 and n. This is especially useful for lenses where power changes significantly with different gaze directions. This is applicable to progressive lenses and single vision lenses that may introduce optical aberrations, such as spherical power errors or unintended cylinder effects.

These variations may be derived from the design of the optical lens of the eyepiece and may be provided as input parameters for the image capture and evaluation system.

The prescription data may be retrieved from a database using for instance a serial number of the eyepiece or of the AR/VR HMD or may be read directly from the optical lens of the eyepiece if said lens is engraved with prescription information.

The ICS may be aligned with the eyepiece as follows.

First, orientations (alpha for azimuth & beta for elevation: Az_mes, Elv_mes) are adjusted to match the user's expected gaze direction (Az_r, Elv_r) when focusing on the center of the virtual image.

For example, if the user is expected to lower their gaze by 15° to view the center of the virtual image, the elevation is set to -15°.

The input pupil of the measuring part is aligned in the X-Y plane to coincide with the expected position of the user's pupil (Xmes=Xp_r, Ymes=Yp_r, Zmes=Zp_r).

The Z-axis is also adjusted so that the eye relief (the distance between the optical lens of the eyepiece and the entry pupil of the ICS) matches the user's individual eye relief or a standard value (e.g., 16mm). The Z-axis adjustment process may be configured to take into account the design of the eyepiece and/or of the AR/VR HMD.

By achieving this alignment, the entry pupil of the ICS and its optical axis emulate a corresponding position of the wearer's eye pupil and a corresponding gaze direction of the wearer. Consequently, the measurements taken reflect the central vision of the user.

The image analysis process, constrained within the field of view (denoted as FOVmes) of the ICS when positioned in a specific position and with a specific orientation to capture an image, is executed consistently across the entire virtual image.

For example, if the FOVmes is 4° (representing a 4° radius for a sharp image) and the total field of view of the eyepiece (FOVvr) is 30° x 30°, a total of 16 (4x4) images would be required to completely scan the virtual image, calculated as 30°/8 = 3.75, rounded up to 4.

The field of view of the ICS noted FOVmes is purposely smaller than the total field of view of the eyepiece because it is challenging to achieve accurate compensation for a broad spectrum of Rx and large FOVs.

Main aberrations such as field curvature and astigmatism tend to become more pronounced with larger FOV and can adversely affect MTF and Michelson contrast, leading to artificially reduced measurements.

During the orientation adjustment process, the Rx compensation may be altered as necessary, particularly for progressive addition lenses (PAL) or single vision (SV) lenses that exhibit significant levels of aberration in the periphery.

An exemplary quality assessment process of a pattern as appearing on a captured image is now described. In this context, the pattern equates to a virtual image.

The quality of the virtual image is evaluated based on the collective analysis of multiple images taken from different orientations. The assessment focuses on whether all images meet predefined acceptance criteria.

In an embodiment where Rx compensation is strictly limited to spherical power compensation, meaning that no cylinder compensation is conducted, the compensation strategy may be focused on a single meridian.

In this case, the spherical power, or focus power, may be adjusted based on the expected Rx of the user. It is assumed here that the 2D sensor produces sharp images only for virtual distances at infinity, and that the eyepiece creates a virtual image of the pattern which, combined with the Rx lens, affects the wavefront and alters the perceived distance of the virtual image.

In cases of astigmatism due for instance to prescription and/or to lens design, achieving a completely sharp image across even a limited field of view is challenging due to residual aberrations from the compensation.

It is then proposed to forego full refraction compensation in the presence of astigmatism. Instead, the focus is compensated in one or more specific directions using variable focus or spherical power. This strategy is based on the understanding that a perfectly sharp image is not essential for accurate image quality measurements. Therefore, the image capture and evaluation system may be configured to assess image quality without compensating for cylinder and by focusing instead on specific orientations, both regarding the generated pattern to appear on the captured images and regarding the predetermined orientation for which compensation is performed to achieve maximum sharpness.

Regarding the selection of the at least one predetermined orientation for image capture, it is generally chosen based on the obtained cylinder axis of the prescription lens. The cylinder axis in an eyeglass prescription indicates the orientation of astigmatism correction. By aligning the image capture orientation with this axis, the system can effectively compensate for the specific astigmatic error present in the lens, thereby providing a more accurate assessment of the image quality.

The target orientation may further depend on the specific image quality test being conducted, in other words to the specific image quality parameter being evaluated. For these reasons, the target orientations for compensation may be either 0° (horizontal), 90° (vertical), 45°/135°, or along the cylinder axis and its perpendicular (Axis/Axis±90°) when the cylinder axis is known as part of the provided prescription data.

The specific pattern generated by the eyewear and shown in at least one image is chosen based on the prescription in a way that maximizes the effectiveness of the image quality test. For example, if the prescription indicates significant astigmatism along a particular axis, the pattern selected would be one that highlights the quality of the image along that axis. This could involve using pattern features (like stripes or grids) that are aligned or oriented perpendicular to the cylinder axis. In the context of the invention, "pattern features" refer to specific visual elements or designs that are used to evaluate the image quality of an eyepiece in augmented and/or virtual reality head mountable devices. These features are integral to the testing process as they provide consistent and measurable benchmarks across different images. The nature of these pattern features is chosen based on their ability to reveal specific aspects of image quality when observed through the eyepiece. For instance, vertical stripes can be considered horizontal features because they present a horizontal alternation of contrasting colors (such as black and white). This pattern is particularly effective for assessing horizontal image attributes like luminance uniformity or horizontal Michelson contrast. The orientation of these stripes (vertical in this case) provides a clear and measurable contrast along the horizontal axis, making it easier to evaluate the uniformity or contrast across this direction.

The choice of pattern ensures that any aberrations or distortions caused by the lens's astigmatic correction are clearly visible in the captured image, allowing for a more thorough and accurate assessment of the eyepiece's optical performance.

Here are some examples of image quality parameters of captured images, wherein each of the image quality parameters is indicative of a quality of the captured image as perceived by a wearer of the AR/VR HMD viewing a generated pattern through the eyepiece.

For assessing horizontal luminance non-uniformity, compensation is set in the horizontal direction (0°), allowing blur in the vertical direction. A full white pattern can be displayed for this test.

Conversely, for vertical luminance non-uniformity, the process is reversed.

To evaluate horizontal Michelson contrast, the image capture and evaluation system again compensates in the horizontal direction (0°), using a display of vertical black and white stripes of varying pixel sizes. The vertical black and white stripes are an example of pattern features extending in a horizontal direction (0°) since the pattern comprises, across the horizontal direction, an alternation of white elements and black elements.

For vertical Michelson contrast assessment, the opposite approach is taken: compensation is set at 90°, and horizontal stripes are displayed.

To determine the horizontal field of view (FOV) or to assess distortion, traditional methods like a full white screen or a vertical/horizontal grid can be used.

The orientation of the features of the pattern and the predetermined direction for the compensation may be both set to 0° for horizontal FOV or edge detection, and to 90° for vertical edges. The generated patterns used may be identical for both orientations, though only one direction of the pattern will appear sharp in each case.

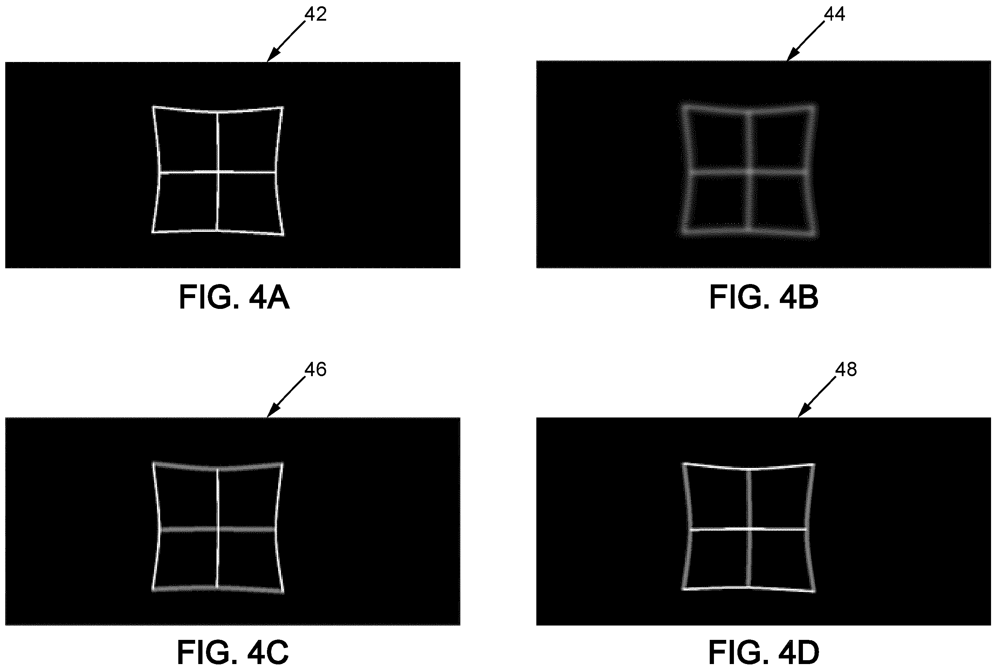

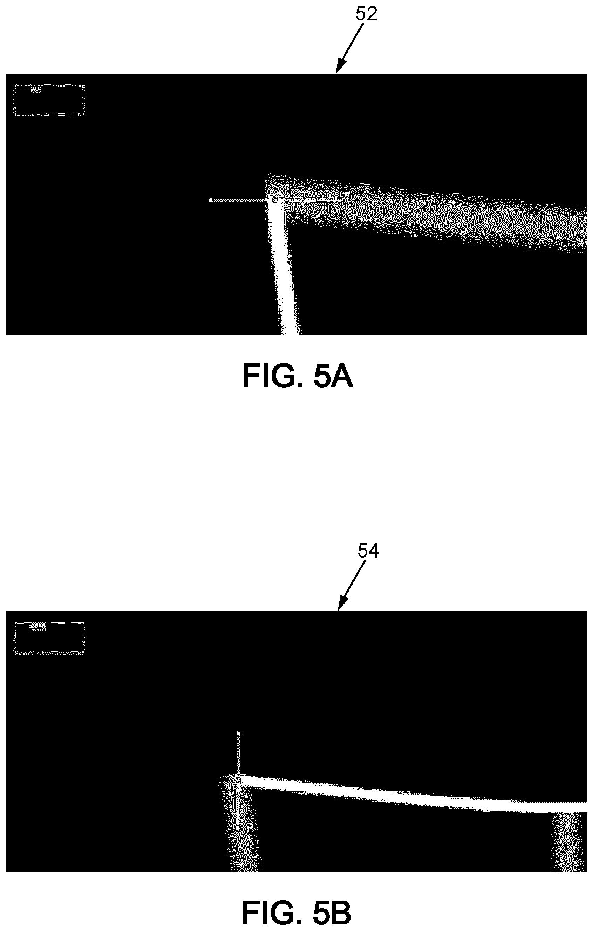

For the exemplary purpose of determining an image quality parameter such as luminance non-uniformity or Michelson contrast along a horizontal/vertical direction, examples of captured images are provided with reference to Fig. 4A, 4B, 4C, 4D, 5A and 5B.

The same generated pattern appears on all these images. This generated pattern can be described as a grid composed of four cells, delineated by concave lines that bow inward towards a central point.

It is considered that the optical lens of the eyepiece exhibits not only a spherical power (in this case S=1 diopter) but also astigmatism at least in the direction from which the images are captured (in this case resulting from a cylindrical power C=-2 diopters).

Fig. 4A is a sharp image (42) captured after a full Rx compensation, including spherical compensation and cylindrical compensation.

Fig. 4B is a blurred image (44) captured without any compensation.

Fig. 4C is an image (46) captured after a spherical compensation across a horizontal direction and without cylindrical compensation. Fig. 5A is a zoomed-in image (52) around the top left corner of Fig. 4C. Fig. 5A further depicts a horizontal line corresponding to a profile extraction which allows determining the horizontal position of the sharp edge. Horizontal edges (i.e. marked by lines extending vertically) appear sharp while vertical edges appear blurry.

Conversely, Fig. 4D is an image (48) captured after a spherical compensation across a vertical direction and without cylindrical compensation. Fig. 5B is a zoomed-in image (54) around the top left corner of Fig. 4D. Fig. 5B further depicts a vertical line corresponding to a profile extraction which allows determining the vertical position of the sharp edge. Vertical edges appear sharp while horizontal edges appear blurry.

It is possible to determine both the horizontal and the vertical coordinates of a sharp edge by applying different Rx compensation settings so as to acquire the images of Fig. 4C and Fig. 4D successively and then perform for instance a profile extraction from Fig. 4C to determine the horizontal coordinate of the sharp edge and a profile extraction from Fig. 4D to determine the vertical coordinate of the sharp edge.

It is also possible to determine a modulation transfer function (MTF) as another example of image quality parameter of a captured image.

For MTF measurements, orientations aligned with the cylinder axis (hereafter, "the axis") or perpendicular to the axis (axis ± 90°) are utilized. The pattern features a slanted edge that corresponds with the selected orientation.

For example, if the axis is set at 15°, compensation is applied at theta = 15° to achieve optimal focus for this direction. Subsequently, a slanted edge image, closely aligned to theta, is displayed for evaluation.

The slanted edge method is a well-known method employed to precisely ascertain the MTF along this direction, benefiting from high accuracy and dense sampling rates-a widely recognized technique for MTF calculation.

It is assumed that the resolution of the 2D sensor exceeds twice that of the image resolution to adhere to the Shannon sampling theorem, ensuring accurate data capture.

It is also possible to detect one or more dead pixels or hot pixels as another example of image quality parameter of a captured image.

To identify dead or hot pixels, an orientation of 0°, 90°, or along the axis can be selected. If 0° is chosen, the resulting image will be sharp in the horizontal direction but not in the vertical.

A pattern of horizontally aligned lines, each one pixel in width and separated vertically by two pixels, can be displayed. This pattern is designed to prevent the vertical blurring from obscuring the identification of pixel anomalies.

For instance, a dead pixel can be detected by displaying maximum intensity light (a grey level of 255) and observing if any pixel's intensity falls below a threshold, such as 5 or 10.

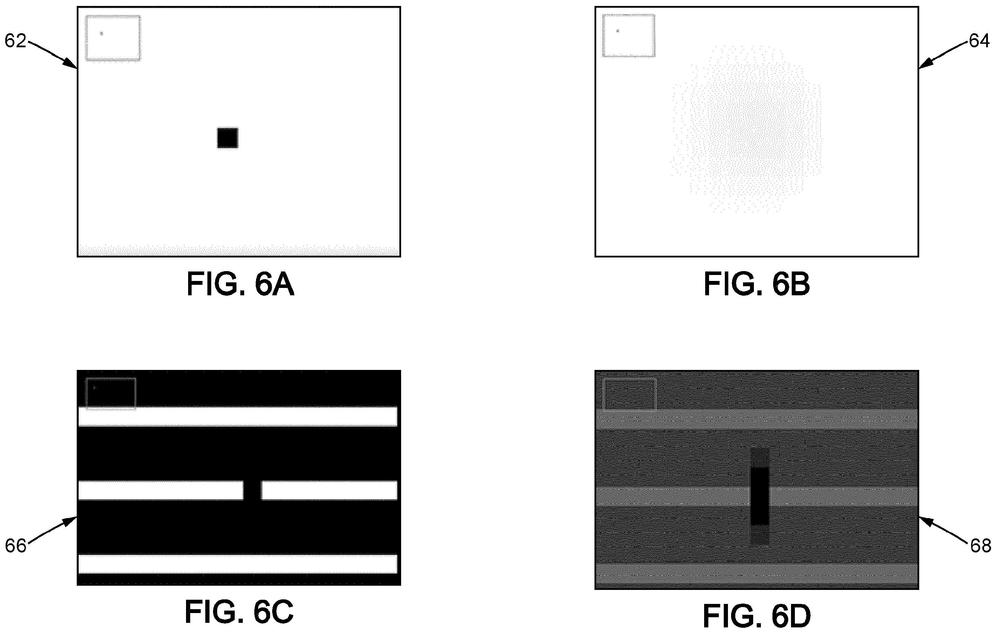

For the exemplary purpose of detecting a dead pixel, examples of captured images are provided with reference to Fig. 6A and 6B.

The same generated pattern appears on both images. This generated pattern is intended to be fully white, and in the provided example a dead pixel is present.

It is considered that the optical lens of the eyepiece exhibits not only a spherical power (in this case S=1 diopter) but also astigmatism at least in the direction from which the images are captured (in this case resulting from a cylindrical power C=-2 diopters with an axis of 0°).

Fig. 6A is a sharp image (62) captured after a full Rx compensation, including spherical compensation and cylindrical compensation, the dead pixel is clearly visible.

Fig. 6B is a blurred image (64) captured without any compensation, the dead pixel is hardly noticeable.

For the exemplary purpose of detecting a dead pixel with a compensation along a predetermined direction, examples of captured images are provided with reference to Fig. 6C and 6D.

The same generated pattern appears on both images. This generated pattern is intended to be formed of horizontal, one-pixel wide, white lines on a dark background, and in the provided example a dead pixel is present on one of the white lines.

Fig. 6C is an image (66) captured after a full Rx compensation, including spherical compensation and cylindrical compensation, the dead pixel is clearly visible.

Conversely, Fig. 6D is an image (68) captured after spherical compensation across a horizontal direction and without cylindrical compensation. In comparison with Fig. 6C, contrast is diminished. The originally white line on a black background appears as a bright line on a dark background and the dead pixel is visible as a spot that is darker than the background and centered on the bright line.

It has been determined that cycling through a sequence of at least three images, with the pattern shifting one pixel vertically in each subsequent image, allows for a comprehensive check of all displayed lines.

It is also possible to assess color uniformity and intensity variation as yet another example of image quality parameter of a captured image.

The above approach which is effective for detecting dead or hot pixels is equally effective for evaluating local color uniformity: color chromaticity across the lines is analyzed, detecting any deviations in the (x,y) or (u,v) color space coordinates.

It also applies to assessing local intensity variations by detecting significant changes in intensity between adjacent horizontal pixels.

A similar methodology is applicable in other directions (90° or 45°/135°), yielding consistent results.

Preferably, the direction chosen should be as close as possible to the cylinder axis to maximize image sharpness.

Alternatively, the cylinder axis itself can be used for theta orientation, directly aligning with the direction requiring the sharpest focus for the specific quality assessment being performed.

The above examples of image quality parameters of a captured image are meant as illustrative examples. The image capture and evaluation system may be configured to determine one or more of image quality parameters according to any one of the above examples and/or to determine other types of image quality parameters. An image quality parameter may be determined by analyzing a single captured image or by analyzing a group of captured images. Statistical methods or artificial intelligence means may be used for analyzing one or more captured images to derive one or more image quality parameters.

Apart from the determination of the direction for applying compensation, it is also possible to determine a specific amount of compensation to apply, for instance a value of spherical power to apply to try and achieve an optimal sharpness.

Assuming that the characteristics of the optical lens of the eyepiece matches a known prescription of the wearer, the compensation P(theta), may be formulated as P(theta) = (S + C/2) - C/2cos(2(theta - Axis)), where S is the spherical correction of the wearer, C is the cylindrical correction of the wearer, and Axis is the axis of the cylinder of the wearer.

As an example, with a prescription of S=0D, C=-1D, Axis=15°, let us calculate the compensation power using the above formula P(theta) = (S + C/2) - C/2cos(2(theta - Axis)).

For an orientation of 0°, the best compensation, P(0°), is determined by P(0°) = S + C/2 - C/2cos(2Axis) resulting in P = -0.07D, indicating a required compensation of 0.07D.

Similarly, for 90°, the best compensation, P(90°), is computed by P(90°) = S + C/2 + C/2cos(2Axis), giving P = -0.93D and necessitating a compensation of 0.93D.

This compensation may be achieved using automatic focusing or variable power optics, which may be continuously variable or a preset selection of lenses.

It should be noted that when theta differs from the cylinder Axis, the compensation may not be perfect, and some blurriness may persist, equivalent to a refractive spherical error of C*sin(Delta_axis), with Delta_axis being the angular difference between theta and Axis.

Therefore, it is generally preferrable to use theta equal to the Axis or to choose the closest possible angle from the set (0°, 90°, 45°/135°) to minimize this error. For precise assessments like MTF or Michelson contrast, it is preferable to align theta with the Axis to ensure sharpness in both the Axis and Axis+90° directions.

The above description illustrates how to perform spherical compensation, by selecting a specific direction and applying a specific amount of spherical compensation in order to capture an image that is suitable for determining an image quality parameter, in a way that aligns with specific types of image quality parameters to be determined.

Indeed, it is desirable to be able to derive a large variety of types of image quality metrics across various images captured from different orientations to thoroughly scan the virtual image's full field of view.

The subsequent explanations focus primarily on an implementation where only spherical compensation is conducted, which is more complex as images remain partially blurred in the presence of astigmatism. If cylindrical compensation is conducted along with spherical compensation, or if the optical lens of the eyepiece exhibits no astigmatism in the first place, the person of ordinary skill in art understands that the subsequent explanations can be simplified accordingly.

In an example, the image quality metrics assessment includes a luminance uniformity assessment.

When theta equals 0°, the captured image is analyzed by extracting lines in the theta direction and examining luminance variations along these lines.

Gradual variations in luminance are discernible even without Rx compensation, but rapid variations, such as those from one pixel to its neighbor, require compensation to be observable.

A criterion may be established for the maximum permissible rapid variation. A possible criterion may be 2*(Lpixel(i,j) - Lpixel(i,j+1)) / (Lpixel(i,j) + Lpixel(i,j+1)) ≤ x%, where Lpixel denotes the luminance of a pixel and x is a threshold value which might be 5% or less, for instance 3%, 1% or less.

In an example, the image quality metrics assessment includes a horizontal and/or a vertical Michelson contrast assessment.

Assuming a horizontal Michelson contrast measurement (theta=0°) with an Axis at 0° or 90°, Michelson contrast may be calculated for various stripe widths (e.g., 1 pixel white/1 pixel black, 2 pixels white/2 pixels black, etc.) as follows.

Horizontal lines are extracted from the image, and the intensity profile, which fluctuates periodically, is analyzed to determine the peak (maximum) and trough (minimum) intensities for each period. The contrast Cm(w) is then calculated as the average <(Imax_p - Imin_p) / (Imax_p + Imin_p)>, over p periods and w being the width of the stripes (e.g. 2 pixels, 4 pixels, 6 pixels, etc.).

If theta aligns with the Axis, then the obtained contrast Cm can be compared to the expected value for a reference device with no prescription (S=0, C=0) or one with purely spherical power Sm equal to S + C/2.

When theta does not equal the cylinder axis angle, then a loss in contrast occurs, attributable to a spherical error of C*sin(Delta_axis), as previously noted. The observed contrast can be compared with the expected contrast for such a spherical error. Acceptance criteria may dictate that Cm(w) deviates by no more than 10%, 5%, or even less than 5% from the reference Cm_reference(w) for at least one, preferably multiple, stripe widths.

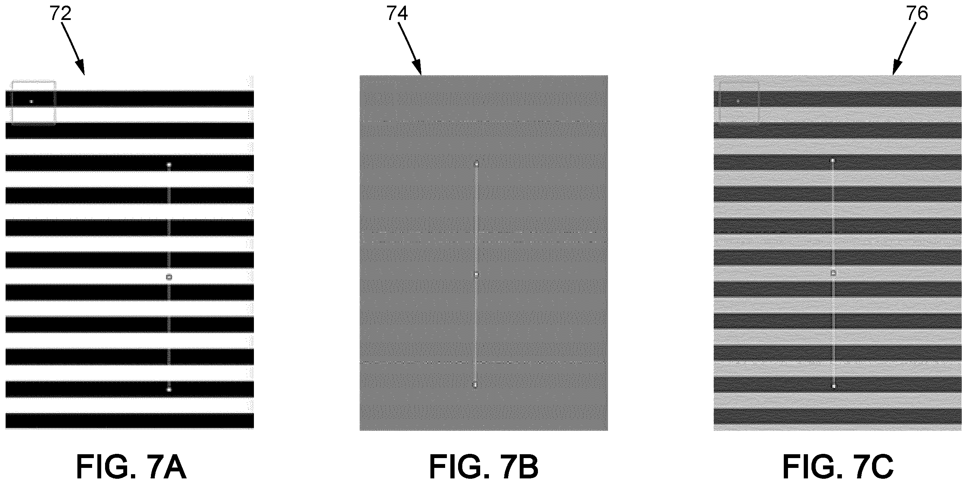

For the exemplary purpose of a vertical Michelson contrast measurement, examples of captured images are provided with reference to Fig. 7B and 7C.

The same generated pattern (72), as illustrated on Fig. 7A, appears on both images. This generated pattern is formed of black and white horizontal stripes.

It is considered that the optical lens of the eyepiece exhibits not only a spherical power (in this case S=1 diopter) but also astigmatism at least in the direction from which the images are captured (in this case resulting from a cylindrical power C=-2 diopters with an axis of 10°).

Fig. 7B is a blurred image (74) captured without any compensation. The contrast is very low and no correct measurement can be done.

Fig. 7C is an image (76) obtained with a spherical compensation along a vertical direction. This image does not exhibit a contrast of 100% because the cylinder axis is not equal to zero, but contrast is nevertheless much improved and can be compared with expected loss of contrast to perform a correct vertical Michelson contrast measurement, for instance by performing an extraction of a luminance profile along a vertical line on Fig. 7C and by analyzing the extracted profile.

In an example, the image quality metrics assessment includes a field of view (FoV) assessment.

To ascertain the FoV, two images of the full screen are captured and Rx compensation is applied in both the vertical and horizontal directions. If the user's cylinder axis aligns with 0° or 90°, this compensation yields sharp edges in the respective direction; otherwise, some edge blur may be evident, though to a lesser extent than with pure spherical correction.

Most cylinder axes are close to 90°±10° or 0°±10°, meaning sharp edges are typically achieved for the majority of users.

Sharp edge detection may be utilized to calculate the FoV, employing any reliable edge detector, such as the Canny method or a luminance threshold set to a specific value such as half of the maximum luminance or of the average luminance in a central region of the pattern.

In an example, the image quality metrics assessment includes a MTF analysis.

For MTF analysis, theta is closely matched to the Axis to ensure the sharpest image quality.

The slanted edge technique may be applied in the theta direction, utilizing well-established methods to derive the MTF.

The Edge Spread Function (ESF) may be obtained for a line oriented at the Axis, and the transition width between intensity levels is examined.

The measuring equipment must possess a resolution superior to that of the AR device to satisfy the Shannon sampling criterion and avoid inaccurate MTF results due to frequency overlap.

Using a slanted edge and multiple line profiles increases the effective resolution of the measuring equipment, allowing for the necessary oversampling and preventing frequency overlap.

Practically, the measuring equipment's resolution should be at least double that of the AR device. For instance, if the AR device has a resolution of 40 pixels/degree, the measuring equipment should have 80 pixels/degree, with an eightfold resolution increase achieved by analyzing eight profile lines with 1/8 pixel shift between them.

The orientation of the measuring equipment may be slightly adjusted (by approximately 0.7°) to ensure that when eight horizontal line profiles, spaced ten pixels apart, are analyzed, each profile has a 1/8 pixel shift.

The oversampled line profile may then be used to compute the Fourier transform, which provides the MTF spectrum.

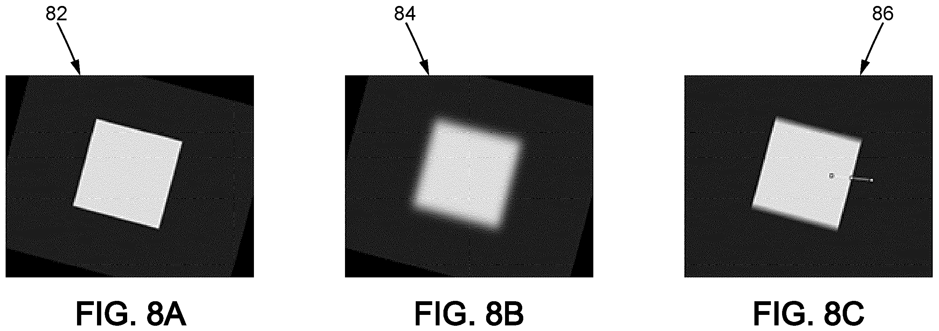

For the exemplary purpose of a MTF analysis, examples of captured images are provided with reference to Fig. 8A, 8B and 8C.

The same generated pattern appears on all three images. This generated pattern is formed of a square which sides are not along horizontal and vertical directions but tilted sideways of an angle equal to 22°-7° =15°. This tilted pattern provides a 1/8 pixel shift between adjacent lines.

It is considered that the optical lens of the eyepiece exhibits not only a spherical power (in this case S=1 diopter) but also astigmatism at least in the direction from which the images are captured (in this case resulting from a cylindrical power C=-2 diopters with an axis of 22°).

Fig. 8A is a sharp image (82) captured with a full spherical and cylindrical compensation, and accurately represents the pattern.

Fig. 8B is a blurred image (84) obtained without any compensation.

Fig. 8C is an image (86) obtained with a spherical compensation along an axis of 15°. This compensation allows obtaining a sharp edge for the right and left sides of the pattern.

A luminance profile is extracted along a line oriented along the axis direction (15°) and crossing the right edge of the pattern.

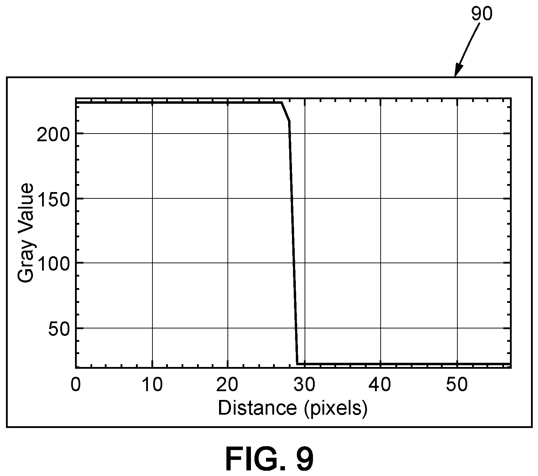

The extracted luminance profile (90) is provided with reference to Fig. 9. It shows the intensity variation of the edge spread function and allows performing MTF analysis. It can be seen that the drop in luminance is sudden, which allows accurately identifying the specific pixel corresponding to the location of the sharp edge.

As already noted, the field of view of the ICS, noted FOVmes, is purposely smaller than the total field of view of the eyepiece because it is challenging to achieve accurate compensation for a broad spectrum of Rx and large FOVs.

Main aberrations such as field curvature and astigmatism tend to become more pronounced with larger FOV and can adversely affect MTF and Michelson contrast, leading to artificially reduced measurements.

A solution involves limiting measurements to a smaller FOVmes where aberrations are minimal.

The optimal FOVmes is inversely proportional to the Rx compensation: the lower the Rx, the larger it is possible to choose FOVmes.

Ideally, the largest feasible FOVmes is employed to minimize the number of measurements required to cover the entire FOV of the virtual image (FOVvr).

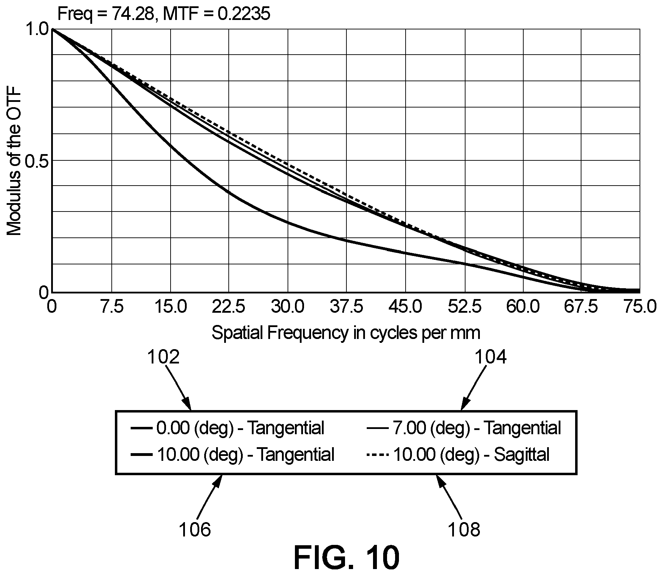

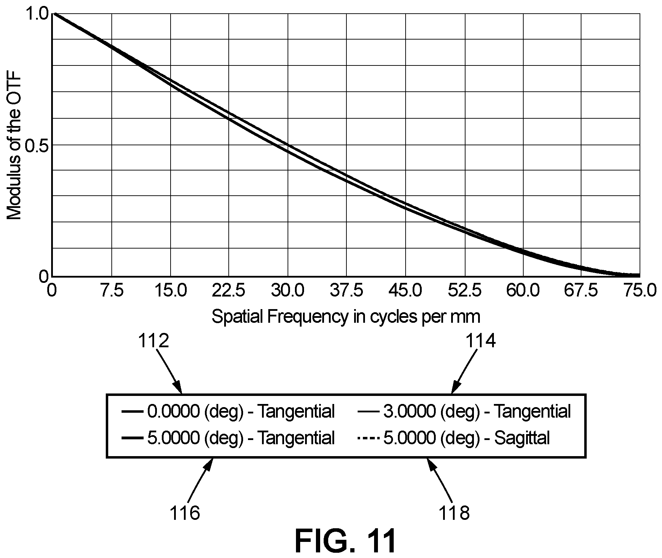

Let us consider, with reference to Fig. 10 and 11, exemplary measurements which are adapted for hyperopic wearers and involve using a +4D additional lens alongside autofocus adjustments to perform spherical compensation.

The additional lens is designed, in this example to be placed 2mm in front of the entry pupil of the ICS and the following characteristics: the additional lens is made of BK7, has a front curvature radius equal to 86mm (concave) and a back curvature equal to 52mm (convex). The curvature radius is designed to optimize aberration for a +4D refraction, with a field of view between 0° and 5°. Spatial frequencies are given using a perfect lens for collimation having an arbitrary 100mm focal length.

Fig. 10 depicts the MTF across different fields of view for Rx = 4D, after spherical compensation in a desired direction. Four curves are represented on Fig. 10.

A first curve (102) corresponds to the tangential MTF as a function of spatial frequency for 0°. The first curve coincides with the sagittal MTF as a function of spatial frequency for 0°.

A second curve (104) corresponds to the tangential MTF as a function of spatial frequency for 7°. The second curve coincides with the sagittal MTF as a function of spatial frequency for 7°.

A third curve (106) corresponds to the tangential MTF as a function of spatial frequency for 10°. A fourth curve (108), which does not coincide with the third curve, corresponds to the sagittal MTF as a function of spatial frequency for 10°. Fig. 10 clearly demonstrates a decrease for FOVs exceeding 7°.

Fig. 11 depicts the MTF across different fields of view for Rx = 4D, after spherical compensation in a desired direction. To avoid FTM drop, FOVmes is considered, in Fig. 11, to be less than or equal to 5°. Four curves are represented on Fig. 11.

A first curve (112) corresponds to the tangential MTF as a function of spatial frequency for 0°. The first curve coincides with the sagittal MTF as a function of spatial frequency for 0°.

A second curve (114) corresponds to the tangential MTF as a function of spatial frequency for 3°. The second curve coincides with the sagittal MTF as a function of spatial frequency for 3°.

A third curve (116) corresponds to the tangential MTF as a function of spatial frequency for 5°. A fourth curve (108), which almost coincides with the third curve, corresponds to the sagittal MTF as a function of spatial frequency for a field of view of 5°.

Fig. 11 clearly demonstrates a limited loss of contrast even with a +4D Rx, when compared to the diffraction-limited MTF.

The MTF has been determined by running tests for various Rx (not only +4D as in Fig. 10 and 11, but also +2D and +1D). They indicate that MTF remains near the diffraction limit for FOVs under 5°. This indicates that to analyze larger FOV images with a Rx comprised between +1D and +4D, it is suitable to perform image measurements on multiple images captured from different orientations with a spherical compensation, with the image capture locations being spaced 10° apart and the ICS being configured to capture the images with a field of view FOVmes having a radius of 5% or less. When considering a total virtual image field of view, corresponding to the field of view provided by the eyepiece, of 30° by 30°, a total of 3x3 images is then sufficient.

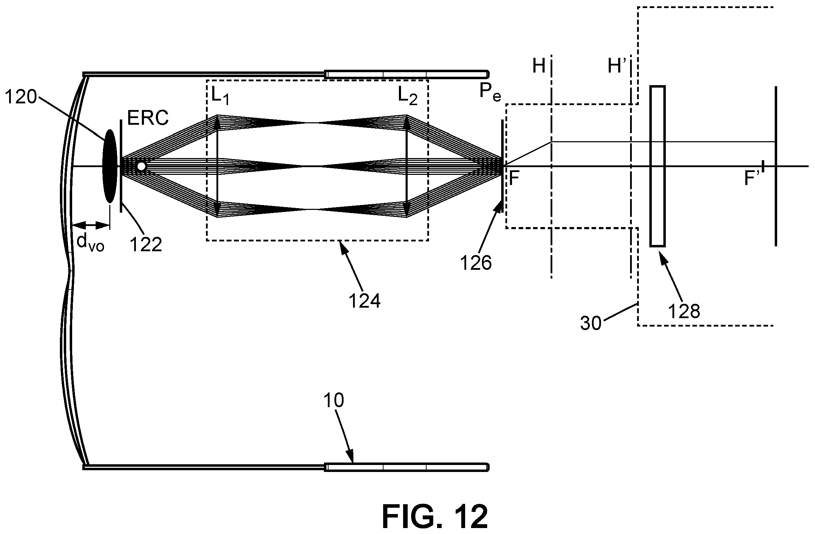

In addition to Fig. 2 and Fig. 3, a more detailed representation of the image capture and evaluation system is provided in an exemplary implementation, with reference to Fig. 12.

This setup may be used to correct focus within a range from +0.25m to infinity, covering the [-4D, 0D] spherical power range.

An autofocus system (124) comprises optical conjugation optics as matching doublet lenses L1 and L2 that minimize chromatic and spherical aberrations. An artificial eye pupil (122) is positioned at the focal point of L1, projecting it to coincide with the entry pupil (126) of the 2D sensor of the ICS at L2's focal point. The autofocus adjustments may be further facilitated by axial shifts of lens L1.

This configuration ensures accurate measurements with a low aberration and a compact design to prevent mechanical interference with the AR/VR HMD (10).

An additional lens (120) may further be provided before the entry pupil to accommodate hyperopic or high myopic wearers, with a +4D lens for [0D, +4D] and a -4D lens for [-8D, -4D].

Additionally, the entire ICS (30), including the 2D sensor (128) such as a photocolorimeter, the optical conjugation optics, and the additional lens (120), may be configured to pivot around the Eye Rotation Center (ERC), which may be positioned at a specific distance chosen approximately 10mm behind the artificial eye pupil (122).

This design allows measurements across different gaze directions, accurately simulating vision for various user eye positions by correctly positioning the ERC in the X-Y-Z coordinates.

The system represented on Fig.2, Fig. 3 and Fig. 12 further comprises a processing circuit (not represented) which is adapted to analyze the captured images in order to determine one or more image quality parameters from each image.

## Claims

1. A system for obtaining an image quality parameter of an eyepiece (20) suitable for being disposed in an augmented and/or virtual reality head mountable device, the eyepiece comprising at least one non-plano lens and one pattern generating module, the system comprising an image capture system (ICS) (30) designed to acquire images within a specific angular range which is smaller than the total field of view of the eyepiece, the ICS comprising a variable focus control unit (VFCU), each image showing a specific pattern generated by the pattern generating module and transmitted by the lens,
the system being configured to utilize the ICS to acquire the images from varied orientations simulating eye movements of a user while operating the VFCU to maintain, for each image, sharpness of the specific pattern showed on said image across at least one predetermined orientation, and
the system being configured to obtain at least one image quality parameter determined from the acquired images, where the parameter is indicative of a quality of images as perceived through the eyepiece.

2. The system of claim 1, wherein the images are acquired by the ICS over angular ranges that collectively cover at least 70% of the total field of view of the eyepiece.

3. The system of claim 1 or 2, further comprising a module for obtaining a prescription of a user of the eyepiece, wherein the VFCU is operated based on the obtained prescription.

4. The system of claim 3, wherein the prescription includes at least one of a sphere value, a cylinder value, a cylinder axis, a prism value and an addition value.

5. The system of any one of claims 1 to 4, wherein the VFCU comprises a cylindrical correction unit (CCU).

6. The system of any one of claims 1 to 4, wherein the VFCU is devoid of a cylindrical correction unit and the at least one predetermined orientation is chosen based on the obtained cylinder axis.

7. The system of any one of claims 3 to 6, wherein the specific pattern generated by the eyewear and showed in at least one image is chosen based on the prescription.

8. The system of any one of claims 3 to 7, wherein a size of the specific angular range within which the ICS acquires images is chosen depending on the user's prescription.

9. The system of any one of claims 1 to 8, wherein the non-plano lens is a progressive lens.

10. The system of any one of claims 1 to 9, wherein the VFCU includes an autofocus module for an optical power adjustment over a limited range, a set of fixed-power lenses, and a mechanism to select, from said set, a lens to be used in conjunction with the autofocus module.

11. A method for obtaining an image quality parameter of an eyepiece (20) suitable for being disposed in an augmented and/or virtual reality head mountable device, the eyepiece comprising at least one non-plano lens and one pattern generating module, the method being implemented by a system for obtaining the image quality parameter of the eyepiece, said system comprising an image capture system (ICS) (30) designed to acquire images within a specific angular range which is smaller than the total field of view of the eyewear, the ICS comprising a variable focus control unit (VFCU), each image showing a specific pattern generated by the pattern generating module and transmitted by the lens,
the method comprising:
utilizing the ICS to acquire the images from varied orientations simulating eye movements of a user while operating the VFCU to maintain, for each image,
sharpness of the specific pattern showed on said image across at least one predetermined orientation, and
obtaining at least one image quality parameter determined from the acquired images, where the parameter is indicative of a quality of images as perceived through the eyepiece.

12. A non-transitory computer-readable storage medium having stored thereon a computer program comprising instructions which, when executed by a system according to claim 1, cause said system to carry out the method according to claim 11.

## Patentansprüche

1. System zum Erhalten eines Bildqualitätsparameters eines Okulars (20), das dazu geeignet ist, in einer am Kopf befestigbaren Vorrichtung für erweiterte und/oder virtuelle Realität angeordnet zu sein, wobei das Okular mindestens eine nicht-plane Linse und ein Mustererzeugungsmodul umfasst, wobei das System ein Bilderfassungssystem (ICS) (30) umfasst, das dazu ausgelegt ist, Bilder innerhalb eines spezifischen Winkelbereichs zu erfassen, der kleiner als das Gesamtsichtfeld des Okulars ist, wobei das ICS eine variable Fokussteuereinheit (VFCU) umfasst, wobei jedes Bild ein spezifisches Muster zeigt, das durch das Mustererzeugungsmodul erzeugt und durch die Linse übertragen wird,
wobei das System dazu ausgelegt ist, das ICS zu verwenden, um die Bilder aus verschiedenen Ausrichtungen zu erfassen, wobei Augenbewegungen eines Benutzers simuliert werden, während die VFCU betrieben wird, um für jedes Bild die Schärfe des auf dem Bild gezeigten spezifischen Musters über mindestens eine vorbestimmte Ausrichtung aufrechtzuerhalten, und
wobei das System dazu ausgelegt ist, mindestens einen aus den erfassten Bildern bestimmten Bildqualitätsparameter zu erhalten, wobei der Parameter eine Qualität von durch das Okular wahrgenommenen Bildern angibt.

2. System nach Anspruch 1, wobei die Bilder durch das ICS über Winkelbereiche erfasst werden, die zusammen mindestens 70 % des Gesamtsichtfeldes des Okulars abdecken.

3. System nach Anspruch 1 oder 2, ferner umfassend ein Modul zum Erhalten einer Verordnung eines Benutzers des Okulars, wobei die VFCU basierend auf der erhaltenen Verordnung betrieben wird.

4. System nach Anspruch 3, wobei die Verordnung einen Spärenwert, einen Zylinderwert, eine Zylinderachse, einen Prismenwert und/oder einen Additionswert beinhaltet.

5. System nach einem der Ansprüche 1 bis 4, wobei die VFCU eine Zylinderkorrektureinheit (CCU) umfasst.

6. System nach einem der Ansprüche 1 bis 4, wobei die VFCU keine Zylinderkorrektureinheit aufweist und die mindestens eine vorbestimmte Ausrichtung basierend auf der erhaltenen Zylinderachse ausgewählt wird.

7. System nach einem der Ansprüche 3 bis 6, wobei das spezifische Muster, das durch die Sehhilfe erzeugt und in mindestens einem Bild gezeigt wird, basierend auf der Verordnung ausgewählt wird.

8. System nach einem der Ansprüche 3 bis 7, wobei eine Größe des spezifischen Winkelbereichs, innerhalb dessen das ICS Bilder erfasst, in Abhängigkeit von der Verordnung des Benutzers ausgewählt wird.

9. System nach einem der Ansprüche 1 bis 8, wobei die nicht-plane Linse eine Gleitsichtlinse ist.

10. System nach einem der Ansprüche 1 bis 9, wobei die VFCU ein Autofokusmodul für eine optische Stärkenanpassung über einen begrenzten Bereich, einen Satz von Linsen mit fester Stärke und einen Mechanismus zum Auswählen einer in Verbindung mit dem Autofokusmodul zu verwendenden Linse aus dem Satz beinhaltet.

11. Verfahren zum Erhalten eines Bildqualitätsparameters eines Okulars (20), das dazu geeignet ist, in einer am Kopf befestigbaren Vorrichtung für erweiterte und/oder virtuelle Realität angeordnet zu sein, wobei das Okular mindestens eine nicht-plane Linse und ein Mustererzeugungsmodul umfasst, wobei das Verfahren durch ein System zum Erhalten des Bildqualitätsparameters des Okulars implementiert wird, wobei das System ein Bilderfassungssystem (ICS) (30) umfasst, das dazu ausgelegt ist, Bilder innerhalb eines spezifischen Winkelbereichs zu erfassen, der kleiner als das Gesamtsichtfeld der Sehhilfe ist, wobei das ICS eine variable Fokussteuereinheit (VFCU) umfasst, wobei jedes Bild ein spezifisches Muster zeigt, das durch das Mustererzeugungsmodul erzeugt und durch die Linse übertragen wird,
wobei das Verfahren Folgendes umfasst:
Verwenden des ICS zum Erfassen der Bilder aus verschiedenen Ausrichtungen, wobei Augenbewegungen eines Benutzers simuliert werden, während die VFCU betrieben wird, um für jedes Bild die Schärfe des auf dem Bild gezeigten spezifischen Musters über mindestens eine vorbestimmte Ausrichtung aufrechtzuerhalten, und
Erhalten mindestens eines aus den erfassten Bildern bestimmten Bildqualitätsparameters, wobei der Parameter eine Qualität von durch das Okular wahrgenommenen Bildern angibt.

12. Nichtflüchtiges computerlesbares Speichermedium, auf dem ein Computerprogramm gespeichert ist, das Anweisungen umfasst, die bei Ausführung durch ein System nach Anspruch 1 bewirken, dass das System das Verfahren nach Anspruch 11 ausführt.

## Revendications

1. Système d'obtention d'un paramètre de qualité d'image d'un oculaire (20) adapté pour être disposé dans un dispositif à monter sur la tête pour réalité augmentée et/ou virtuelle, l'oculaire comprenant au moins une lentille non afocale et un module de génération de motifs, le système comprenant un système de capture d'images (ICS) (30) conçu pour acquérir des images dans une plage angulaire spécifique plus petite que le champ de vision total de l'oculaire, l'ICS comprenant une unité de commande de focale variable (VFCU), chaque image représentant un motif spécifique généré par le module de génération de motifs et transmis par la lentille,
le système étant configuré pour exploiter l'ICS pour acquérir les images à partir d'orientations variées simulant les mouvements oculaires d'un utilisateur tout en actionnant la VFCU afin de maintenir, pour chaque image, la netteté du motif spécifique représenté sur ladite image selon au moins une orientation prédéterminée, et
le système étant configuré pour obtenir au moins un paramètre de qualité d'image déterminé à partir des images acquises, le paramètre indiquant une qualité d'images telle que perçue à travers l'oculaire.

2. Système selon la revendication 1, les images étant acquises par l'ICS sur des plages angulaires qui couvrent collectivement au moins 70 % du champ de vision total de l'oculaire.

3. Système selon la revendication 1 ou 2, comprenant en outre un module destiné à obtenir une ordonnance d'un utilisateur de l'oculaire, la VFCU étant actionnée sur la base de l'ordonnance obtenue.

4. Système selon la revendication 3, l'ordonnance comprenant au moins un élément parmi une valeur de sphère, une valeur de cylindre, un axe de cylindre, une valeur de prisme et une valeur d'addition.

5. Système selon l'une quelconque des revendications 1 à 4, la VFCU comprenant une unité de correction cylindrique (CCU).

6. Système selon l'une quelconque des revendications 1 à 4, la VFCU étant dépourvue d'une unité de correction cylindrique et l'orientation ou les orientations prédéterminées étant choisies sur la base de l'axe de cylindre obtenu.

7. Système selon l'une quelconque des revendications 3 à 6, le motif spécifique généré par les lunettes et présenté dans au moins une image étant choisi sur la base de l'ordonnance.

8. Système selon l'une quelconque des revendications 3 à 7, une taille de la plage angulaire spécifique dans laquelle l'ICS acquiert des images étant choisie en fonction de l'ordonnance de l'utilisateur.

9. Système selon l'une quelconque des revendications 1 à 8, la lentille non afocale étant une lentille progressive.

10. Système selon l'une quelconque des revendications 1 à 9, la VFCU comprenant un module de mise au point automatique pour un réglage de puissance optique sur une plage limitée, un ensemble de lentilles à puissance fixe, et un mécanisme pour sélectionner, à partir dudit ensemble, une lentille à utiliser conjointement avec le module de mise au point automatique.

11. Procédé d'obtention d'un paramètre de qualité d'image d'un oculaire (20) adapté pour être disposé dans un dispositif à monter sur la tête pour réalité augmentée et/ou virtuelle, l'oculaire comprenant au moins une lentille non afocale et un module de génération de motifs, le procédé étant mis en œuvre par un système d'obtention du paramètre de qualité d'image de l'oculaire, ledit système comportant un système de capture d'images (ICS) (30) conçu pour acquérir des images dans une plage angulaire spécifique plus petite que le champ de vision total des lunettes, l'ICS comprenant une unité de commande de focale variable (VFCU), chaque image représentant un motif spécifique généré par le module de génération de motifs et transmis par la lentille,
le procédé comprenant :
l'utilisation de l'ICS pour acquérir les images à partir d'orientations variées simulant les mouvements oculaires d'un utilisateur tout en actionnant la VFCU afin de maintenir, pour chaque image, la netteté du motif spécifique représenté sur ladite image selon au moins une orientation prédéterminée, et
l'obtention d'au moins un paramètre de qualité d'image déterminé à partir des images acquises, le paramètre indiquant une qualité d'images telle que perçue à travers l'oculaire.

12. Support de stockage non transitoire lisible par ordinateur sur lequel est stocké un programme informatique comprenant des instructions qui, lorsqu'elles sont exécutées par un système selon la revendication 1, amènent ledit système à réaliser le procédé selon la revendication 11.
